(19) Europäisches Patentamt / European Patent Office / Office européen des brevets

(11) **EP 1 757 009 B1**

## (12) FASCICULE DE BREVET EUROPEEN

(45) Date de publication et mention
de la délivrance du brevet:
**10.05.2017 Bulletin 2017/19**

(21) Numéro de dépôt: **05775259.4**

(22) Date de dépôt: **06.06.2005**

(51) Int Cl.:
***H04L 9/06*** *(2006.01)*

(86) Numéro de dépôt international:
**PCT/FR2005/001376**

(87) Numéro de publication internationale:
**WO 2006/008355 (26.01.2006 Gazette 2006/04)**

(54) **PROCÉDÉ ET DISPOSITIF D'EXÉCUTION D'UN CALCUL CRYPTOGRAPHIQUE**

VERFAHREN UND ANORDNUNG ZUR AUSFÜHRUNG EINER KRYPTOGRAPHISCHEN BERECHNUNG

METHOD AND DEVICE FOR CARRYING OUT A CRYPTOGRAPHIC CALCULATION

(84) Etats contractants désignés:
**AT BE BG CH CY CZ DE DK EE ES FI FR GB GR HU IE IS IT LI LT LU MC NL PL PT RO SE SI SK TR**

(30) Priorité: **18.06.2004 FR 0406678**

(43) Date de publication de la demande:
**28.02.2007 Bulletin 2007/09**

(73) Titulaire: **MORPHO**
**92130 Issy-Les-Moulineaux (FR)**

(72) Inventeurs:
- **DOTTAX, Emmanuelle**
**F-78700 Conflans Sainte Honorine (FR)**
- **CHABANNE, Hervé**
**F-78200 Mantes la Jolie (FR)**
- **CARLIER, Vincent**
**F-91400 Orsay (FR)**

(74) Mandataire: **Cabinet Plasseraud**
**66 rue de la Chaussée d'Antin**
**75440 Paris Cedex 09 (FR)**

(56) Documents cités:
- OSWALD E, MANGARD S, PRAMSTALLER N: "Secure and Efficient Masking of AES - A Mission Impossible? (version 1.0)" SCA-LAB TECHNICAL REPORT SERIES. TUG. IAIK, [Online] 4 juin 2004 (2004-06-04), XP002315432 GRAZ AUSTRIA Cryptology ePrint Archive Extrait de l'Internet: URL:http://eprint.iacr.org/2004/134.pdf> [extrait le 2005-01-26] cité dans la demande
- TSUNG-FU LIN ET AL: "A high-throughput low-cost AES cipher chip" 2002 IEEE ASIA-PACIFIC CONFERENCE ON ASIC. PROCEEDINGS., 6 août 2002 (2002-08-06), pages 85-88, XP010602799 PISCATAWAY, NJ, USA cité dans la demande
- WOLKERSTORFER J, OSWALD E, LAMBERGER M: "An ASIC Implementation of the AES Sboxes" LECTURE NOTES IN COMPUTER SCIENCE, LNCS 2271, TOPICS IN CRYPTOLOGY, CT-RSA 2002, THE CRYPTOGRAPHER'S TRACK AT THE RSA CONFERENCE 2002, SAN JOSE, CA, USA, FEBRUARY 18-22, 2002. PROCEEDINGS., vol. 2271, 2002, pages 67-78, XP002315433 SPRINGER-VERLAG, BERLIN, HEIDELBERG
- AKKAR M-L ET AL: "AN IMPLEMENTATION OF DES AND AES, SECURE AGAINST SOME ATTACKS" 2001, CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS, LECTURE NOTES IN COMPUTER SCIENCE, BERLIN : SPRINGER, DE, PAGE(S) 309-318 , XP008002641 ISBN: 3-540-42521-7 abrégé page 309, ligne 1 - page 316, ligne 14

**Description**

La présente invention est relative au domaine de la cryptographie et plus particulièrement à la protection de la confidentialité des clés utilisées par des algorithmes cryptographiques. Elle est décrite ci-après dans son application non limitative à des fonctions de chiffrement ou de déchiffrement.

Les algorithmes de chiffrement, respectivement de déchiffrement, ou encore de cryptage, ont pour objectif de chiffrer, respectivement de déchiffrer, des données. De tels algorithmes comprennent généralement un enchaînement de plusieurs opérations, ou calculs, que l'on applique successivement sur une donnée à chiffrer afin d'obtenir une donnée chiffrée. Ces algorithmes utilisent des clés secrètes.

De tels algorithmes de chiffrement peuvent subir des 'attaques' qui visent à violer la confidentialité de clés utilisées. De nombreux types d'attaques sont aujourd'hui connus.

Ainsi, certaines attaques sont fondées sur des fuites d'information détectées lors de l'exécution de l'algorithme de chiffrement. Ces attaques sont généralement basées sur une corrélation entre les fuites d'informations détectées lors du traitement par l'algorithme de chiffrement de la donnée et de la clé ou des clés (attaques par analyse de la consommation de courant, des émanations électromagnétiques, du temps de calcul...).

On connaît des méthodes de protection contre de telles attaques. Une des méthodes de protection couramment utilisée est le masquage aléatoire des données intermédiaires manipulées par l'algorithme de chiffrement ou de déchiffrement. Dans ce type de protection, les données en entrée sont masquées par des valeurs aléatoires. Ainsi, les données intermédiaires résultant des opérations effectuées dans l'algorithme peuvent être décorrélées de la clé ou des clés.

Les attaques qui visent à violer la confidentialité des clés secrètes d'un algorithme de chiffrement sont similaires aux attaques qui visent à violer la confidentialité des clés secrètes d'un algorithme de déchiffrement. Dans les sections suivantes les caractéristiques décrites relativement à un algorithme de chiffrement concernent également un algorithme de déchiffrement.

Un algorithme de chiffrement comprend de manière générale plusieurs opérations linéaires et/ou non linéaires. Pour une donnée initiale à chiffrer, on obtient une donnée intermédiaire après chacune des opérations de l'algorithme de chiffrement. Lorsque l'on manipule des données intermédiaires masquées, on obtient après chaque opération une donnée intermédiaire masquée. On protège ainsi l'algorithme de chiffrement.

Il est toutefois utile de récupérer la donnée intermédiaire non masquée après chacune de ces opérations en 'démasquant' la donnée. Il est aisé de démasquer une donnée intermédiaire résultant d'une opération linéaire. En effet, une opération linéaire L appliquée à une donnée x masquée par un ou exclusif avec un masque aléatoire m, peut s'écrire sous la forme :

$$L(x \oplus m) = L(x) \oplus L(m).$$

Ainsi, connaissant m, il est facile de démasquer $L(x \oplus m)$ pour obtenir $L(x)$.

Il en est tout autrement pour des opérations non linéaires. En effet, pour une opération non linéaire F appliquée à une donnée x masquée par un ou exclusif avec un masque aléatoire m, on peut de manière générale écrire :

$$F(x \oplus m) \neq F(x) \oplus F(m).$$

Afin de démasquer une donnée intermédiaire manipulée par l'algorithme de chiffrement, il est nécessaire d'effectuer une série de calculs qui peuvent être complexes et coûteux selon l'algorithme de chiffrement à protéger.

On connaît des algorithmes de chiffrement utilisant des opérations non linéaires, tels que l'algorithme DES pour 'Data Encryption Standard' ou encore l'algorithme AES pour 'Advanced Encryption Standard'. Plusieurs procédés de protection par masquage de l'algorithme AES ont déjà été proposés.

Dans de tels algorithmes, les opérations non linéaires sont généralement implémentées sous forme de tables de substitution. Ainsi, une opération non linéaire correspondant à une table de substitution tab[i], appliquée à une donné x peut s'écrire sous la forme suivante :

$$y = tab[x].$$

La protection par masquage dans ce cas requiert la génération à la volée des tables masquées aléatoirement. Ainsi, une opération non linéaire masquée correspondant à une table de substitution masquée tab'[i], appliquée à une donnée x masquée par un masque aléatoire m1 peut s'écrire sous la forme :

$$y' = tab'[x \oplus m1] = y \oplus m2$$

Afin de pouvoir démasquer la donnée y' ainsi obtenue, une solution consiste à stocker les tables masquées. Des méthodes de protection de ce type sont proposées pour l'algorithme de chiffrement DES dans le document de Louis Goubin et Jacques Patarin 'DES and Differential Power Analysis -The "Duplication" Method', in Cetin Kaya Koç and Christof Paar, editors, Proceedings of CHES'99, volume 1717 de 'Lecture Notes in Computer Science', pages 158-172, Springer-Verlag, 2000, ainsi que dans le brevet FR 2802741 'Dispositif mettant en oeuvre un algorithme de chiffrage par bloc à répétition de rondes'.

Toutefois, une telle solution peut s'avérer extrêmement coûteuse en place mémoire, notamment lorsque la table de substitution non masquée est de taille relativement grande.

Par exemple, l'opération non linéaire de l'AES peut être implémentée en utilisant une table de substitution ayant une taille de 256 octets. Le chiffrement simultané de 16 octets d'un message requiert le stockage de 16 tables de substitution masquées de 256 octets chacune. La taille mémoire requise pour masquer l'opération non linéaire ainsi implémentée est par conséquent de 4 Ko.

Un inconvénient de ce type de protection est donc qu'il requiert une taille mémoire conséquente.

On connaît également le document 'Provably Secure Masking of AES' de Johannes Blömer, Guajardo Merchan, et Volker Krummel publié le 30-04-04 et le document 'Secure and Efficient Masking of AES - A Mission Impossible' version 1 de E. Oswald, Stephan Mangard and Norbert Pramstaller daté du 4 Juin 2004 qui proposent de réaliser l'opération non linéaire de l'algorithme AES dans le corps fini GF(4).

Ce dernier article propose une méthode de masquage des opérations de l'algorithme AES dans laquelle on transforme l'opération non linéaire d'une donnée masquée intermédiaire en une opération linéaire par transposition d'un corps fini ($GF(2^8)$) à un autre (GF(4)).

Toutefois, un tel procédé de masquage de l'AES propose de réaliser les opérations non linéaires dans GF(4) et donc de manipuler des bits 2 par 2.

De manière générale, il est plus facile d'implémenter de manière performante des opérations réalisées sur des blocs de bits de taille sensiblement égale au nombre de bits traités simultanément par le micro processeur utilisé plutôt que des opérations réalisées sur des blocs de bits de taille très sensiblement différente du nombre de bits traités simultanément par le micro processeur.

Ainsi, une implémentation performante d'un algorithme de chiffrement manipulant des bits 2 par 2 n'est pas aisée sur des microprocesseurs 8, 16, 32 ou même 64 bits.

La présente invention vise à proposer une solution pour pallier ces inconvénients.

Un premier aspect de l'invention propose un procédé d'exécution d'un calcul cryptographique dans un composant électronique, selon un algorithme cryptographique déterminé incluant au moins une opération non linéaire spécifiée sur des blocs de données de k bits, k étant un entier supérieur à 2, le procédé comprenant les étapes suivantes:

- générer plusieurs blocs de données intermédiaires masqués de j bits à partir d'un bloc de données initial de k bits, j étant un entier plus petit que k;

- appliquer une opération non linéaire à au moins un des blocs de données intermédiaires masqués de j bits au moyen d'une table de substitution à $2^j$ entrées produisant un bloc de données modifié de j bits;

- combiner le bloc de données modifié de j bits et certains au moins desdits blocs de données intermédiaires masqués de j bits en un bloc de résultat de k bits correspondant au bloc de données initial de k bits à travers une transformation incluant ladite opération non linéaire spécifiée.

Ainsi, on peut réaliser l'opération non linéaire spécifiée sur des blocs de données de taille k sur des blocs de données de taille j en générant plusieurs blocs de données intermédiaires de taille j, les tailles étant exprimées en bits, à partir d'un bloc de données de taille k. Après avoir manipulé les blocs de données intermédiaires, et notamment appliquer une opération non linéaire, on combine des blocs de données ainsi obtenus pour récupérer un bloc de données de taille k correspondant à une transformation du bloc de donnée initial. Cette transformation inclue l'opération non linéaire spécifiée. Elle peut également inclure d'autres opérations de l'algorithme. En effet, il peut être avantageux de réaliser d'autres opérations de l'algorithme sur des blocs de données de j bits plutôt que des blocs de données de k bits, avant de combiner ces blocs pour obtenir à nouveau un bloc de données de k bits.

L'étape de génération de plusieurs blocs de données intermédiaires à partir d'un bloc de donnée initial peut comprendre plusieurs étapes, comme des sections suivantes le détaille. Ainsi, avantageusement on manipule des blocs de données de taille inférieure au bloc de données initial à chiffrer par l'algorithme. Par conséquent l'opération non linéaire spécifiée, comprise dans l'algorithme de chiffrement peut être appliquée aux blocs de données intermédiaires de taille inférieure et de ce fait, la table de substitution correspondant à l'opération non linéaire appliquée aux blocs de données intermédiaires est de taille strictement inférieure à la taille d'une table de substitution qui correspondrait à l'opération non linéaire spécifiée de l'algorithme appliquée au bloc de données initial.

Grâce à ces dispositions, on peut protéger par masquage les calculs cryptographiques d'un algorithme de chiffrement qui comprend une opération non linéaire, notamment dans le cas où cette opération non linéaire correspondrait à une table de substitution de taille relativement grande.

L'étape de masquage peut avantageusement être réalisée soit sur les blocs de données initiaux, avant l'étape consistant à générer les blocs de données intermédiaires, soit sur les blocs de données intermédiaires.

Dans un mode de réalisation de la présente invention, l'étape de génération comprend une opération de décomposition (T) consistant à décomposer un bloc de données de k bits (a) en des blocs de données de j blocs (b, c) et l'étape de combinaison comprend une opération de décomposition inverse ($T^{-1}$) consistant à composer un bloc de données de k bits (a') à partir des blocs de données de j bits (B, C).

Dans un mode de réalisation de la présente invention, le calcul cryptographique de l'algorithme inclue en outre au moins une opération linéaire et on effectue l'opération linéaire masquée avant l'opération de décomposition T ou après l'opération de décomposition inverse $T^{-1}$. Dans ce cas, lorsque l'algorithme de chiffrement comprend des opérations linéaires avant l'opération non linéaire, on effectue l'opération de décomposition T après les opérations linéaires. Lorsque l'algorithme de chiffrement comprend des opérations linéaires après l'opération non linéaire, on effectue l'opération de décomposition inverse $T^{-1}$ avant les opérations linéaires.

Dans un autre mode de réalisation, lorsque l'algorithme de chiffrement inclue des opérations linéaires, on effectue ces opérations linéaires masquées après l'opération de décomposition T et avant l'opération de décomposition inverse $T^{-1}$. Ainsi, lorsqu'un tel algorithme de chiffrement est un algorithme à répétition de tours, chacun des tour comprenant au moins une opération linéaire et au moins une opération non linéaire, on effectue chaque tour après l'opération de décomposition T et avant l'opération de décomposition $T^{-1}$.

On peut également appliquer l'opération de décomposition T au début de l'algorithme de chiffrement et l'opération de décomposition inverse $T^{-1}$ à la fin de l'algorithme de chiffrement. Ainsi, lorsqu'un tel algorithme est un algorithme de chiffrement à répétition de tours, on effectue toutes les opérations de tous les tours de l'algorithme en manipulant des blocs de taille strictement inférieure à la taille du bloc de données initial.

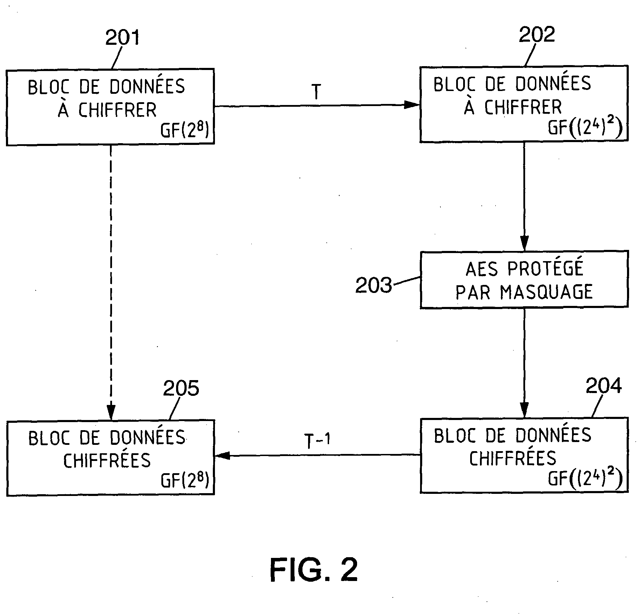

La figure 2 illustre un tel mode de réalisation appliqué à un algorithme de type AES. Ainsi, un bloc de données de taille k à chiffrer 201 est décomposé par l'opération de décomposition T en plusieurs blocs de données intermédiaires (202) à chiffrer de taille j. On applique alors, sur les blocs de données intermédiaires de taille j, les opérations protégées par masquage 203 équivalentes à celles de l'algorithme de type AES spécifiées pour des blocs de données de taille k. On obtient des blocs de données intermédiaires chiffrés 204. Puis, on applique l'opération de décomposition inverse $T^{-1}$ pour obtenir le bloc de données de taille k chiffré 205. Un tel mode de réalisation requiert donc une modification des opérations de l'algorithme pour qu'elles soient applicables aux blocs de données intermédiaires.

L'étape de génération des blocs de données intermédiaires masqués peut comprendre des additions masquées et des multiplications masquées qui sont réalisées suivant un algorithme de multiplication masquée prenant en entrée des blocs de données de taille j masqués et un masque aléatoire et fournissant un produit masqué des deux blocs de données non masquées.

L'étape de combinaison de blocs de données intermédiaires et du bloc de données modifié peut également comprendre des additions masquées et des multiplications masquées qui sont réalisées suivant un algorithme de multiplication masquée prenant en entrée des blocs de données de taille j masqués et un masque aléatoire et fournissant un produit masqué des deux blocs de données non masquées

Comme détaillé dans une section suivante, lorsque le bloc de données initial a une taille d'un octet et lorsqu'on peut implémenter l'opération non linéaire spécifiée au moyen d'une table de substitution de taille égale à 256 octets, comme dans un algorithme de type AES, on peut avantageusement appliquer l'opération non linéaire sur un bloc de données intermédiaire en utilisant une table de substitution ayant une taille de 8 octets.

Dans un mode de réalisation de la présente invention, l'opération non linéaire est bijective et, pour les éléments non nuls, correspond à une inversion multiplicative dans un corps fini. De préférence, par convention, cette opération fait correspondre l'élément 0 à l'élément 0.

Dans un mode de réalisation de la présente invention, l'algorithme de chiffrement, prenant en entrée un message comprenant un nombre déterminé de blocs de données initiaux de taille k, traite séquentiellement chacun des blocs de données initiaux. Ainsi, on génère et on stocke une table de substitution pour chaque bloc de donnée initial puis on traite chaque bloc de données, l'un après l'autre.

Dans un autre mode de réalisation de la présente invention, l'algorithme de chiffrement traite simultanément tous les blocs de données d'un message d'entrée. Ainsi, on génère et on stocke simultanément les tables de substitution pour chacun des blocs de données initiaux du message, puis on traite simultanément lesdits blocs de données du message. Ce type de traitement simultané de blocs requiert une zone mémoire de taille plus grande que le traitement séquentiel des blocs de données. Dans un tel contexte, comme détaillé dans une section suivante, il s'avère être très avantageux de réduire la table de substitution correspondant à l'opération non linéaire, comme cela est proposé par la présente invention.

Dans un mode de réalisation de la présente invention, on traite un bloc de données initial en utilisant, chaque fois que l'on réalise l'opération non linéaire de l'algorithme de chiffrement, une table de substitution générée au début de l'algorithme de chiffrement. Ainsi, on utilise la même table de substitution pendant tout le traitement d'un bloc de données initial par l'algorithme de chiffrement.

On peut également générer et stocker une table de substitution avant chaque opération non linéaire masquée. Dans ce mode de réalisation, on utilise une nouvelle table de substitution avant chaque réalisation de l'opération non linéaire.

De tels algorithmes comprennent classiquement plusieurs tours comprenant chacun des opérations linéaires et au moins une opération non linéaire. Les attaques les plus fréquentes de l'exécution de calculs dans de tels algorithmes sont basées sur des détections de fuite d'information au cours de l'exécution des premiers tours et des derniers tours, puisque ce sont les tours qui manipulent des blocs de données proches des blocs de données à chiffrer et des blocs de données chiffrés. Ainsi, pour protéger de tels algorithmes contre ces attaques, on peut masquer les blocs de données manipulés dans le ou les premiers tours et/ou dans le ou les derniers tours. Par conséquent, il peut être avantageux de générer et stocker des table de substitution pour au moins le premier tour et au moins le dernier tour.

Un second aspect de la présente invention propose un composant électronique d'exécution d'un calcul cryptographique selon un algorithme cryptographique déterminé incluant au moins une opération non linéaire spécifiée sur des blocs de données de k bits, k étant un entier supérieur à 2, le composant comprenant:

- des moyens pour générer plusieurs blocs masqués de j bits à partir d'un bloc de données initial de k bits, j étant un entier plus petit que k;

- des moyens pour appliquer une opération non linéaire à au moins un des blocs masqués de j bits au moyen d'une table de substitution à $2^j$ entrées produisant un bloc modifié de j bits;

    - des moyens pour combiner le bloc modifié de j bits et certains au moins desdits blocs masqués de j bits en un bloc de résultat de k bits correspondant au bloc de données initial de k bits à travers une transformation incluant ladite opération non linéaire spécifiée.

Grâce à ces dispositions, on peut protéger, contre des attaques de détections de fuite d'informations, un composant électronique mettant en oeuvre un algorithme de chiffrement de type AES comprenant une opération non linéaire en manipulant des blocs de données masqués et en utilisant des tables de substitution masquées de taille égale à 8 octets au lieu de tables de substitution masquées de taille égale à 256 octets.

Par conséquent, un tel procédé de protection d'algorithme de chiffrement requiert une taille mémoire relativement faible. Il peut donc être mis en oeuvre dans des composants électroniques de chiffrement présentant une zone mémoire de taille relativement petite.

Par ailleurs, dans un mode de réalisation de la présente invention, on manipule des blocs de données intermédiaires de taille 4 bits. Une telle taille permet une implémentation performante plus facile à réaliser que lorsqu'on manipule des blocs de données de taille inférieure.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre un procédé de protection d'algorithme de chiffrement selon un mode de réalisation de la présente invention ;
- la figure 2 illustre un procédé de protection d'algorithme de chiffrement de type AES selon un mode de réalisation de la présente invention.

Dans un mode de réalisation de la présente invention, on utilise des propriétés mathématiques bien connues des corps finis (ou corps de Galois, Galois Field (GF)) afin de générer à partir d'un bloc de données initial de taille k plusieurs blocs de données de taille strictement inférieure à k. Un mode de réalisation de la présente invention est décrit pour protéger par masquage un algorithme de chiffrement de type AES, prenant en entrée un message composé de 16 octets, chacun des octets étant traité par une répétition de tours comprenant chacun une séquence d'opérations linéaires et au moins une opération non linéaire. L'invention couvre d'autre type d'algorithme de chiffrement comprenant au moins une opération non linéaire, qu'il soit à répétition de tours ou non.

Dans un algorithme de type AES, l'opération non linéaire correspond à une inversion multiplicative, pour les éléments non nuls, dans le corps fini $GF(2^8)$. Ainsi, afin de générer à partir d'un bloc de donnée plusieurs blocs de données intermédiaires de taille strictement inférieure, dans un mode de réalisation de l'invention, on propose de transposer l'opération non linéaire du corps $GF(2^8)$ au corps $GF((2^4)^2)$.

On connaît le document de Tsing-Fu Ling, Chih-Pin Su, Chih-Tsun Huang, et Cheng-Wen Wu 'A high-throuhput low-cost AES cipher chip publiée en 2002, ainsi que le document de Vincent Rijmen 'Efficient implementation of the Rijndael S-box et le document de Atri Rudra, Pradeep K. Dubey, Charanjit S. Julla, Vijay Kumar, Josyula R. Rao, et Pankaj Rohatgi 'Efficient Rijndael Encryption Implementation with Composite Field Arithmetic' publiée en 2001 puis le document de R. W. Ward et T. C. A. Molteno 'Efficient hardware calculation of inversion in GF (28) publiée en 2003 qui montrent comment l'opération non linéaire de l'algorithme de l'AES peut être transportée dans le corps composé $GF(2^4)^2)$ et qui montrent qu'une telle transposition permet d'améliorer les performances de l'algorithme de chiffrement.

Classiquement, l'AES prend donc en entrée un message composé de 16 octets. Plusieurs tours sont appliqués sur chacun de ces octets, chaque tour utilisant une sous-clé dérivée de la clé secrète principale. L'AES comprend généralement les opérations suivantes :

- une opération non linéaire, classiquement référencée SubBytes. correspondant à une table de substitution de 8 bits vers 8 bits qui est appliquée à chacun des 16 octets du message d'entrée ;
- une opération linéaire de ou exclusif, classiquement référencée AddRoundKey, appliquée entre les 16 octets de la sous clé et les 16 octets du message d'entrée ;
- une opération linéaire, classiquement référencée ShiftRows, corrrespondant à une permutation appliquée aux 16 octets;
- une opération linéaire, classiquement référencée MixColumns, appliquée aux 16 octets.

L'opération SubBytes de l'algorithme AES comprend une opération non linéaire qui correspond, dans le corps fini $GF(2^8)$, pour les éléments non nuls, à une inversion multiplicative. Une telle opération peut être transportée dans le corps composé $GF((2^4)^2)$, de sorte que l'on manipule des blocs de données de taille 4 bits, avant de réaliser l'opération de décomposition inverse $T^{-1}$ pour d'autres opérations manipulant des octets.

On choisit une représentation de $GF(2^4)$ et le polynôme de corps suivant :

$$P(x) = x^2+Dx+E \; ;$$

D et E étant des éléments du corps fini $GF(2^4))$

De sorte que l'on peut écrire :

$$GF(2^8) \cong GF(2^4)[x]/P(x)$$

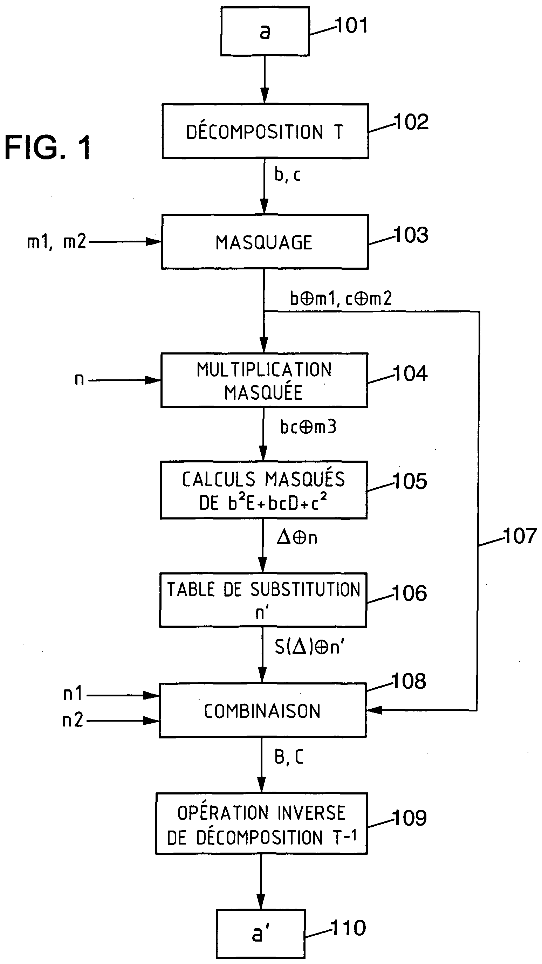

La figure 1 illustre un mode de réalisation de la présente invention.

On construit l'opération de décomposition T 102 qui s'écrit :

$$T(a) = bx +c \; ;$$

où a est un élément de $GF(2^8)$
où (bx + c) est un élément de $GF((2^4)^2)$, et b et c sont des éléments du corps fini $GF(2^4))$.

Cette opération de décomposition T génère à partir du bloc de donnée a de taille égale à un octet des blocs de données intermédiaires b et c de taille égale à 4 bits.

Cette opération de décomposition peut être implémentée sous la forme d'une multiplication avec une matrice 8x8.

Après cette opération de décomposition, les blocs de données manipulées sont des blocs de données intermédiaires de taille 4 bits, strictement inférieure à la taille du bloc de donnée initial 8 bits.

Une telle opération de décomposition T permet de réduire la taille des blocs de données manipulées de manière à pouvoir réduire la taille de la table de substitution correspondant à la première opération non linéaire. Elle est de ce fait réalisée avant d'effectuer l'opération non linéaire. Toutefois, elle peut être réalisée à différentes étapes de l'algorithme de chiffrement. Ainsi, sur chacun des 16 octets du message d'entrée, cette opération de décomposition peut être réalisée soit au début de l'algorithme, soit au début de chacun des tours de l'algorithme, soit encore avant chaque réalisation de l'opération non linéaire.

La présente invention couvre les modes de réalisation quelque soit l'étape de l'algorithme dans laquelle cette opération de décomposition est réalisée.

Puis, lorsque l'opération non linéaire utilisant la table de substitution est effectuée, on peut réaliser l'opération de décomposition inverse T$^{-1}$ pour retourner dans le corps fini GF(2$^8$) et manipuler à nouveau des octets.

La présente invention couvre les modes de réalisation quelque soit l'étape de l'algorithme dans laquelle l'opération de décomposition inverse est réalisée.

Suivant les étapes auxquelles on réalise l'opération de décomposition T et l'opération de décomposition inverse T$^{-1}$, d'autres opérations de l'algorithme déterminées dans GF(2$^8$) sont adaptés au corps fini GF((2$^4$)$^2$).

Ainsi, si on effectue l'opération de décomposition T avant l'opération non linéaire puis si on effectue l'opération de décomposition inverse T$^{-1}$ après l'opération non linéaire, il n'est pas nécessaire d'adapter d'autres opérations de l'algorithme au corps fini GF((2$^4$)$^2$). Par contre, dans le cas où effectue l'opération de décomposition T au début de l'algorithme et l'opération de décomposition inverse T$^{-1}$ à la fin de l'algorithme de chiffrement, toutes les opérations de l'algorithme sont adaptées au corps fini GF((2$^4$)$^2$). Les opérations de l'algorithme de chiffrement sont alors remplacées par leurs équivalents dans le corps fini GF((2$^4$)$^2$).

Dans un mode de réalisation de la présente invention, on masque 103 au moins les blocs de données intermédiaires manipulés au moment de l'opération non linéaire pour au moins le premier tour et le dernier tour de l'algorithme AES, comme les sections suivantes le détaille. L'invention couvre également un mode de réalisation dans lequel les blocs intermédiaires manipulés au moment de l'opération non linéaire sont masqués pour tous les tours de l'algorithme ou encore un mode de réalisation dans lequel tout ou partie des blocs de données intermédiaires manipulés au cours de l'exécution de l'algorithme sont masquées, que ces blocs de données soient des éléments de GF(2$^8$) ou de GF((2$^4$)$^2$).

Dans un mode de réalisation de la présente invention, l'opération non linéaire est une inversion multiplicative dans GF(2$^4$) pour les éléments non nuls.

Dans le corps fini GF((2$^4$)$^2$), l'inversion d'un élément (bx + c) peut s'écrire sous la forme suivante :

$$(bx+c)^{-1} = b\,\Delta^{-1}\,x + (c + b\,D)\,\Delta^{-1}\;;$$

où $\Delta = b^2E + bcD + c^2$.

Ainsi, la première opération non linéaire d'inversion multiplicative du corps fini GF(2$^8$) transposée dans le corps fini GF((2$^4$)$^2$), correspond à des multiplications, additions et l'opération non linéaire d'inversion multiplicative. Cette opération non linéaire dans le corps fini GF((2$^4$)$^2$) peut être implémentée par une table de substitution de 4 bits vers 4 bits occupant 8 octets.

Comme cela a été décrit, on souhaite masquer les blocs de données ainsi manipulés. Le masquage des additions est bien connu.

Afin de masquer les multiplications, on introduit un algorithme de multiplication masquée M(x, y, z)) 104. Dans la suite, les éléments m1, m2, m3, n, n', n1, n2 sont des masques aléatoires. Un tel algorithme prend en entrée :

- des éléments de GF(2$^4$) masqués, (b $\oplus$ m1) et (c $\oplus$ m2);
- un masque m3.

Un tel algorithme fournit en sortie le produit masqué sous la forme :

$$bc \oplus m3.$$

On peut écrire les étapes suivantes :

$$u = (b \oplus m1)(c \oplus m2) = bc \oplus bm2 \oplus cm1 \oplus m1m2$$

$$v = (c \oplus m2)m1 = cm1 \oplus m1m2$$

$$w = (b \oplus m1)m2 = bm2 \oplus m1m2$$

$$M(b \oplus m1, c \oplus m2, m3) = u \oplus v \oplus w \oplus m1m2 \oplus m3 = bc \oplus m3$$

Dans un mode de réalisation de la présente invention, on masque les premiers blocs de données intermédiaires. On obtient ainsi une première décomposition masquée qui s'écrit sous la forme suivante :

$$(b \oplus m1)x + (c \oplus m2).$$

Puis on utilise l'algorithme de multiplication masqués pour calculer la multiplication masquée sous la forme suivante :

$$M(b \oplus m1, c \oplus m2, m3) = bc \oplus m3.$$

Puis, de la même manière, on calcule, selon l'étape 105, les produits suivants afin d'obtenir le bloc de données $\Delta$ masqué:

$$p = (bc \oplus m3)D = bcD \oplus m3D;$$

$$q = (b \oplus m1)^2E = b^2E \oplus m1^2E ;$$

$$r = (c \oplus m2)^2 = c^2 \oplus m2^2.$$

On obtient par conséquent l'équation suivante :

$$p \oplus q \oplus r \oplus m1^2E \oplus m2^2 \oplus m3D \oplus n = \Delta \oplus n.$$

Ainsi, dans le corps fini $GF(2^4)$ par addition et multiplication on obtient le bloc de données masqué, $\Delta \oplus n$, auquel on applique l'opération non linéaire d'inversion multiplicative.

Dans un mode de réalisation de la présente invention, on réalise cette opération non linéaire sur le bloc de données masqué en utilisant une table de substitution masquée, tab[x]. selon l'étape 106, vérifiant l'équation suivante :

$$tab[x \oplus n] = x^{-1} \oplus n'.$$

Cette table de substitution masquée permet donc d'obtenir l'inversion du bloc de données masqué, soit $\Delta^{-1} \oplus n'$.

Par application de l'algorithme de multiplication masquée, on calcule :

- $M(b \oplus m1, \Delta^{-1} \oplus n', n1) = b\Delta^{-1} \oplus n1 = B$ ;
- $M(bD + c) \oplus ((m1D + m2), \Delta^{-1} \oplus n', n2) = (bD + c) \Delta^{-1} \oplus n2 = C$.

Ainsi, par combinaison 108 des blocs de données masqués $b \oplus m1$, $c \oplus m2$ et $\Delta^{-1} \oplus n'$, on obtient $Bx + C$.

On obtient donc une valeur masquée de $(bx+c)^{-1}$ sans avoir manipuler, pour réaliser cette opération non linéaire, les blocs de données b, c et $\Delta$ non masqués.

Puis, on réalise l'opération de décomposition inverse $T^{-1}$ 109 pour obtenir un élément 110 :

$$a' = T^{-1}(Bx + C).$$

Dans un mode de réalisation de la présente invention, on détermine D égal à 1 afin de réduire le nombre de multiplications à effectuer.

Avantageusement, on transpose donc une opération non linéaire du corps fini $GF(2^8)$ au corps fini $GF((2^4)^2)$ dans lequel l'opération non linéaire correspond à une combinaison, d'additions, de multiplications et d'une opération non linéaire équivalente dans un corps ayant moins d'éléments.

Ainsi, on peut protéger des composants électroniques des attaques par détection de fuites d'information lors de l'exécution d'un calcul cryptographique comprenant une opération non linéaire en réalisant des opérations équivalentes à cette opération non linéaire sur des blocs de données de taille réduite, ce qui permet de réaliser ces calculs sur des blocs de données masqués puisque la table de substitution correspondante est de taille réduite.

**Revendications**

1. Procédé d'exécution d'un calcul cryptographique dans un composant électronique, selon un algorithme cryptographique déterminé incluant au moins une opération non linéaire spécifiée sur des blocs de données de k bits, k étant un entier supérieur à 2, le procédé comprenant les étapes suivantes:

   - générer plusieurs blocs de données intermédiaires masqués de j bits ($b \oplus m1$, $c \oplus m2$, $\Delta \oplus n$) à partir d'un bloc de données initial de k bits (a), j étant un entier plus petit que k;
   - appliquer une opération non linéaire S à au moins un des blocs de données intermédiaires masqués de j bits ($\Delta \oplus n$) au moyen d'une table de substitution (106) à $2^j$ entrées produisant un bloc de données modifié de j bits ($S(\Delta) \oplus n'$);
   - combiner le bloc de données modifié de j bits et certains au moins desdits blocs de données intermédiaires masqués de j bits en un bloc de résultat de k bits (a') correspondant au bloc de données initial de k bits à travers une transformation incluant ladite opération non linéaire spécifiée.

2. Procédé selon la revendication 1, suivant lequel on masque le bloc de données initial, avant l'étape consistant à générer les blocs de données intermédiaires.

3. Procédé selon la revendication 1, suivant lequel on masque les blocs de données intermédiaires (103), avant d'appliquer l'opération non linéaire.

4. Procédé selon l'une quelconque des revendications précédentes, suivant lequel l'étape de génération comprend une opération de décomposition (T) consistant à décomposer un bloc de données de k bits en des blocs de données de j blocs (b, c) et l'étape de combinaison comprend une opération de décomposition inverse ($T^{-1}$) consistant à composer un bloc de données de k bits à partir des blocs de données de j bits (B, C) en un bloc de données de k bits (a').

5. Procédé selon la revendication 4, suivant lequel calcul cryptographique inclue en outre au moins une opération linéaire et suivant lequel on effectue ladite opération linéaire masquée avant l'opération de décomposition (T) ou après l'opération de décomposition inverse ($T^{-1}$).

6. Procédé selon la revendication 4, suivant lequel calcul cryptographique inclue en outre une opération linéaire et suivant lequel on effectue ladite opération linéaire masquée après l'opération de décomposition (T) et avant l'opération de décomposition inverse ($T^{-1}$).

7. Procédé selon la revendication 4, suivant lequel on applique l'opération de décomposition (T) au début de l'algorithme cryptographique et l'opération de décomposition inverse ($T^{-1}$) à la fin de l'algorithme cryptographique.

8. Procédé selon l'une quelconque des revendications précédentes, suivant lequel l'étape de génération des blocs de données intermédiaire masqués comprend des additions masquées et des multiplications masquées qui sont réalisées suivant un algorithme de multiplication masquée prenant en entrée des blocs de données de taille j masqués et un masque aléatoire et fournissant un produit masqué des deux blocs de données non masquées.

9. Procédé selon l'une quelconque des revendications précédentes, suivant lequel l'étape de combinaison de blocs de données intermédiaires et du bloc de données modifié comprend des additions masquées et des multiplications masquées qui sont réalisées suivant un algorithme de multiplication masquée prenant en entrée des blocs de données de taille j masqués et un masque aléatoire et fournissant un produit masqué des deux blocs de données non masquées.

**10.** Procédé selon l'une quelconque des revendications précédentes, suivant lequel un bloc de données a une taille d'un octet, la table de substitution a une taille de 8 octets ; et suivant lequel l'opération non linéaire est bijective et, pour les éléments non nuls, est une inversion multiplicative dans un corps fini.

**11.** Procédé selon l'une des revendications précédentes, suivant lequel on masque un bloc de données en réalisant un ou exclusif entre le bloc de données et un masque aléatoire.

**12.** Procédé selon l'une quelconque des revendications précédentes, suivant lequel l'algorithme cryptographique prend en entrée un message comprenant un nombre déterminé de blocs de données initiaux de taille k, et

suivant lequel, séquentiellement pour chacun des blocs de données initiaux dudit message, on génère et stocke une table de substitution puis on traite ledit bloc de données.

**13.** Procédé selon la revendication 12, suivant lequel on génère et on stocke simultanément les tables de substitution pour chacun des blocs de données initiaux du message, puis on traite simultanément lesdits blocs de données du message.

**14.** Procédé selon la revendication 12 ou 13, suivant lequel, on chiffre un bloc de données en utilisant, pour toutes les opérations de l'algorithme cryptographique, une table de substitution générée au début de l'algorithme cryptographique.

**15.** Procédé selon la revendication 12 ou 13, suivant lequel on génère une table de substitution avant chaque opération non linéaire masquée.

**16.** Procédé selon la revendication 12 ou 13, suivant lequel l'algorithme comprend un nombre déterminé de tours, et suivant lequel on génère et on stocke une table de substitution pour au moins le premier tour et au moins le dernier tour.

**17.** Procédé selon l'une quelconque des revendications précédentes, suivant lequel l'algorithme cryptographique est l'AES.

**18.** Composant électronique d'exécution d'un calcul cryptographique selon un algorithme cryptographique déterminé incluant au moins une opération non linéaire spécifiée sur des blocs de données de k bits, k étant un entier supérieur à 2, le composant comprenant:

- des moyens pour générer plusieurs blocs masqués de j bits à partir d'un bloc de données initial de k bits, j étant un entier plus petit que k;
- des moyens pour appliquer une opération non linéaire S à au moins un des blocs masqués de j bits au moyen d'une table de substitution à $2^j$ entrées produisant un bloc modifié de j bits;
- des moyens pour combiner le bloc modifié de j bits et certains au moins desdits blocs masqués de j bits en un bloc de résultat de k bits correspondant au bloc de données initial de k bits à travers une transformation incluant ladite opération non linéaire spécifiée.

**19.** Composant électronique selon la revendication 18, suivant lequel l'algorithme cryptographique est l'AES.

**Patentansprüche**

**1.** Verfahren zur Ausführung einer kryptographischen Berechnung in einem elektronischen Bauteil gemäß einem bestimmten kryptographischen Algorithmus, der mindestens eine spezifizierte nichtlineare Operation an Datenblöcken von k Bits umfasst, wobei k eine ganze Zahl größer als 2 ist, wobei das Verfahren die folgenden Schritte enthält:

- Erzeugung mehrerer maskierter Zwischendatenblöcke von j Bits ($b \oplus m1$, $c \oplus m2$, $\Delta \oplus n$) ausgehend von einem Ausgangsdatenblock von k Bits (a), wobei j eine kleinere ganze Zahl als k ist;
- Anwenden einer nichtlinearen Operation S an mindestens einen der maskierten Zwischendatenblöcke von j Bits ($\Delta \oplus n$) mittels einer Substitutionstabelle (106) mit $2^j$ Eingängen, die einen geänderten Datenblock von j Bits ($S(\Delta) \oplus + n'$) erzeugt;
- Kombinieren des geänderten Datenblocks von j Bits und mindestens bestimmter der maskierten Zwischendatenblöcke von j Bits in einem Ergebnisblock von k Bits (a') entsprechend dem Ausgangsdatenblock von k Bits über eine Transformation, die die spezifizierte nichtlineare Operation umfasst.

**2.** Verfahren nach Anspruch 1, wobei der Ausgangsdatenblock vor dem Schritt maskiert wird, der darin besteht, die Zwischendatenblöcke zu erzeugen.

**3.** Verfahren nach Anspruch 1, wobei die Zwischendatenblöcke (103) maskiert werden, ehe die nichtlineare Operation angewendet wird.

**4.** Verfahren nach einem der vorhergehenden Ansprüche, wobei der Erzeugungsschritt eine Zerlegungsoperation (T) enthält, die darin besteht, einen Datenblock von k Bits in Datenblöcke von j Bits (b, c) zu zerlegen, und der Kombinationsschritt eine inverse Zerlegungsoperation (T$^{-1}$) enthält, die darin besteht, einen Datenblock von k Bits ausgehend von den Datenblöcken von j Bits (B, C) in einen Datenblock von k Bits (a') zusammenzusetzen.

**5.** Verfahren nach Anspruch 4, wobei die kryptographische Berechnung außerdem mindestens eine lineare Operation umfasst, und wobei die maskierte lineare Operation vor der Zerlegungsoperation (T) oder nach der inversen Zerlegungsoperation (T$^{-1}$) ausgeführt wird.

**6.** Verfahren nach Anspruch 4, wobei die kryptographische Berechnung außerdem eine lineare Operation umfasst, und wobei die maskierte lineare Operation nach der Zerlegungsoperation (T) und vor der inversen Zerlegungsoperation (T$^{-1}$) ausgeführt wird.

**7.** Verfahren nach Anspruch 4, wobei die Zerlegungsoperation (T) zu Beginn des kryptographischen Algorithmus und die inverse Zerlegungsoperation (T$^{-1}$) am Ende des kryptographischen Algorithmus angewendet werden.

**8.** Verfahren nach einem der vorhergehenden Ansprüche, wobei der Schritt der Erzeugung der maskierten Zwischendatenblöcke maskierte Additionen und maskierte Multiplikationen enthält, die gemäß einem maskierten Multiplikationsalgorithmus durchgeführt werden, der am Eingang maskierte Datenblöcke der Größe j und eine Zufallsmaske nimmt und ein maskiertes Produkt der zwei nicht maskierten Datenblöcke liefert.

**9.** Verfahren nach einem der vorhergehenden Ansprüche, wobei der Schritt der Kombination von Zwischendatenblöcken und des geänderten Datenblocks maskierte Additionen und maskierte Multiplikationen enthält, die gemäß einem maskierten Multiplikationsalgorithmus durchgeführt werden, der am Eingang maskierte Datenblöcke der Größe j und eine Zufallsmaske nimmt und ein maskiertes Produkt der zwei nicht maskierten Datenblöcke liefert.

**10.** Verfahren nach einem der vorhergehenden Ansprüche, wobei ein Datenblock die Größe eines Bytes hat, die Substitutionstabelle eine Größe von 8 Bytes hat; und wobei die nichtlineare Operation bijektiv und für die Elemente ungleich Null eine multiplikative Inversion in einem endlichen Körper ist.

**11.** Verfahren nach einem der vorhergehenden Ansprüche, wobei ein Datenblock maskiert wird, indem ein Oder-Exklusiv zwischen dem Datenblock und einer Zufallsmaske hergestellt wird.

**12.** Verfahren nach einem der vorhergehenden Ansprüche, wobei der kryptographische Algorithmus am Eingang eine Nachricht nimmt, die eine bestimmte Anzahl von Ausgangsdatenblöcken der Größe k enthält, und wobei sequentiell für jeden der Ausgangsdatenblöcke der Nachricht eine Substitutionstabelle erzeugt und gespeichert und dann der Datenblock verarbeitet wird.

**13.** Verfahren nach Anspruch 12, wobei die Substitutionstabellen für jeden der Ausgangsdatenblöcke der Nachricht gleichzeitig erzeugt und gespeichert werden, dann die Datenblöcke der Nachricht gleichzeitig verarbeitet werden.

**14.** Verfahren nach Anspruch 12 oder 13, wobei ein Datenblock verschlüsselt wird, indem für alle Operationen des kryptographischen Algorithmus eine Substitutionstabelle verwendet wird, die zu Beginn des kryptographischen Algorithmus erzeugt wurde.

**15.** Verfahren nach Anspruch 12 oder 13, wobei eine Substitutionstabelle vor jeder maskierten nichtlinearen Operation erzeugt wird.

**16.** Verfahren nach Anspruch 12 oder 13, wobei der Algorithmus eine bestimmte Anzahl von Durchläufen enthält, und wobei eine Substitutionstabelle für mindestens den ersten Durchlauf und mindestens den letzten Durchlauf erzeugt und gespeichert wird.

**17.** Verfahren nach einem der vorhergehenden Ansprüche, wobei der kryptographische Algorithmus der AES ist.

**18.** Elektronisches Bauteil zur Ausführung einer kryptographischen Berechnung gemäß einem bestimmten kryptographischen Algorithmus, der mindestens eine spezifizierte nichtlineare Operation an Datenblöcken von k Bits umfasst, wobei k eine ganze Zahl größer als 2 ist, wobei das Bauteil enthält:

- Einrichtungen zur Erzeugung mehrerer maskierter Blöcke von j Bits ausgehend von einem Ausgangsdatenblock von k Bits, wobei j eine kleinere ganze Zahl als k ist;
- Einrichtungen zur Anwendung einer nichtlinearen Operation S an mindestens einen der maskierten Blöcke von j Bits mittels einer Substitutionstabelle mit $2^j$ Eingängen, die einen geänderten Datenblock von j Bits erzeugt;
- Einrichtungen zur Kombination des geänderten Blocks von j Bits und mindestens bestimmter der maskierten Blöcke von j Bits in einem Ergebnisblock von k Bits entsprechend dem Ausgangsdatenblock von k Bits über eine Transformation, die die spezifizierte nichtlineare Operation umfasst.

**19.** Elektronische Bauteil nach Anspruch 18, wobei der kryptographische Algorithmus der AES ist.


**Claims**

**1.** A method for carrying out a cryptographic calculation in an electronic component, according to a determined cryptographic algorithm including at least one nonlinear operation specified on data blocks of k bits, k being an integer greater than 2, the method comprising the following steps:

- generating several masked intermediate data blocks of j bits ($b \oplus m1$, $c \oplus m2$, $\Delta \oplus n$) from an initial data block of k bits (a), j being an integer smaller than k;
- applying a nonlinear operation S to at least one of the masked intermediate data blocks of j bits ($\Delta \oplus n$) by means of a substitution table (106) with $2^j$ entries producing a modified data block of j bits ($S(\Delta) \oplus n'$);
- combining the modified data block of j bits and certain at least of said masked intermediate data blocks of j bits into a result block of k bits (a') corresponding to the initial data block of k bits through a transformation including said specified nonlinear operation.

**2.** The method as claimed in claim 1, according to which the initial data block is masked before the step consisting in generating the intermediate data blocks.

**3.** The method as claimed in claim 1, according to which the intermediate data blocks (103) are masked before applying the nonlinear operation.

**4.** The method as claimed in any one of the preceding claims, according to which the generating step comprises a decomposition operation (T) consisting in decomposing a data block of k bits into data blocks of j blocks (b, c) and the combining step comprises an inverse decomposition operation ($T^{-1}$) consisting in composing a data block of k bits from the data blocks of j bits (B, C) into a data block of k bits (a').

**5.** The method as claimed in claim 4, according to which the cryptographic calculation furthermore includes at least one linear operation and according to which said masked linear operation is performed before the decomposition operation (T) or after the inverse decomposition operation ($T^{-1}$).

**6.** The method as claimed in claim 4, according to which the cryptographic calculation furthermore includes a linear operation and according to which said masked linear operation is performed after the decomposition operation (T) and before the inverse decomposition operation ($T^{-1}$).

**7.** The method as claimed in claim 4, according to which the decomposition operation (T) is applied at the start of the cryptographic algorithm and the inverse decomposition operation ($T^{-1}$) at the end of the cryptographic algorithm.

**8.** The method as claimed in any one of the preceding claims, according to which the step of generating the masked intermediate data blocks comprises masked additions and masked multiplications which are carried out according to a masked multiplication algorithm taking masked data blocks of size j and a random mask as input and providing a masked product of the two unmasked data blocks.

9. The method as claimed in any one of the preceding claims, according to which the step of combining the intermediate data blocks and the modified data block comprises masked additions and masked multiplications which are carried out according to a masked multiplication algorithm taking masked data blocks of size j and a random mask as input and providing a masked product of the two unmasked data blocks.

10. The method as claimed in any one of the preceding claims, according to which a data block has a size of a byte, the substitution table has a size of 8 bytes; and according to which the nonlinear operation is bijective and, for the non null elements, is a multiplicative inversion in a finite field.

11. The method as claimed in any one of the preceding claims, according to which a data block is masked by carrying out an exclusive or between the data block and a random mask.

12. The method as claimed in any one of the preceding claims, according to which the cryptographic algorithm takes as input a message comprising a determined number of initial data blocks of size k, and
according to which, sequentially for each of the initial data blocks of said message, a substitution table is generated and stored and then said data block is processed.

13. The method as claimed in claim 12, according to which the substitution tables are generated and stored simultaneously for each of the initial data blocks of the message, then said data blocks of the message are processed simultaneously.

14. The method as claimed in claim 12 or 13, according to which, a data block is encrypted using, for all the operations of the cryptographic algorithm, a substitution table generated at the start of the cryptographic algorithm.

15. The method as claimed in claim 12 or 13, according to which a substitution table is generated before each masked nonlinear operation.

16. The method as claimed in claim 12 or 13, according to which the algorithm comprises a determined number of rounds, and according to which a substitution table is generated and stored for at least the first round and at least the last round.

17. The method as claimed in any one of the preceding claims, according to which the cryptographic algorithm is the AES.

18. An electronic component for carrying out a cryptographic calculation according to a determined cryptographic algorithm including at least one nonlinear operation specified on data blocks of k bits, k being an integer greater than 2, the component comprising:

   - means for generating several masked blocks of j bits from an initial data block of k bits, j being an integer smaller than k;
   - means for applying a nonlinear operation S to at least one of the masked blocks of j bits by means of a substitution table with $2^j$ entries producing a modified block of j bits;
   - means for combining the modified block of j bits and certain at least of said masked blocks of j bits into a result block of k bits corresponding to the initial data block of k bits through a transformation including said specified nonlinear operation.

19. The electronic component as claimed in claim 18, according to which the cryptographic algorithm is the AES.

FIG. 1

FIG. 2

## RÉFÉRENCES CITÉES DANS LA DESCRIPTION

### Documents brevets cités dans la description

- FR 2802741

### Littérature non-brevet citée dans la description

- DES and Differential Power Analysis -The ''Duplication'' Method. **LOUIS GOUBIN ; JACQUES PATARIN.** Proceedings of CHES'99. Lecture Notes in Computer Science, 2000, vol. 1717, 158-172
- **JOHANNES BLÖMER ; GUAJARDO MERCHAN ; VOLKER KRUMMEL.** *Provably Secure Masking of AES,* 20040430
- **E. OSWALD ; STEPHAN MANGARD ; NORBERT PRAMSTALLER.** *Secure and Efficient Masking of AES - A Mission Impossible,* 04 Juin 2004
- **TSING-FU LING ; CHIH-PIN SU ; CHIH-TSUN HUANG ; CHENG-WEN WU.** *A high-throuhput low-cost AES cipher chip,* 2002
- **VINCENT RIJMEN.** *Efficient implementation of the Rijndael S-box*
- **ATRI RUDRA ; PRADEEP K. DUBEY ; CHARANJIT S. JULLA ; VIJAY KUMAR ; JOSYULA R. RAO ; PANKAJ ROHATGI.** *Efficient Rijndael Encryption Implementation with Composite Field Arithmetic,* 2001
- **R. W. WARD ; T. C. A. MOLTENO.** *Efficient hardware calculation of inversion in GF (2),* 2003